# EUROPÄISCHE PATENTSCHRIFT

(11) **EP 1 433 209 B1**
(45) Veröffentlichungstag und Bekanntmachung des Hinweises auf die Patenterteilung: **24.01.2007**
(21) Anmeldenummer: 02774436.6
(22) Anmeldetag: 01.10.2002
(51) Int. Cl.: H01L 41/053

(54) **AKTOREINHEIT MIT WENIGSTENS ZWEI AKTORELEMENTEN**
ACTUATOR UNIT COMPRISING AT LEAST TWO ACTUATOR ELEMENTS
UNITE ACTIONNEUR POURVUE D'AU MOINS DEUX ELEMENTS ACTIONNEURS

(30) Priorität: 02.10.2001 DE 10148603
(43) Veröffentlichungstag der Anmeldung: 30.06.2004
(73) Patentinhaber: SIEMENS AKTIENGESELLSCHAFT, 80333 München (DE)
(72) Erfinder: OUVENOU, Lorand, 93170 Bernhardswald (DE)
(86) Internationale Anmeldenummer: PCT/DE2002/003720
(87) Internationale Veröffentlichungsnummer: WO 2003/031798

(56) Entgegenhaltungen:
- WO-A-00/17944
- WO-A-94/19598
- DE-A- 2 710 935
- DE-A- 3 916 539
- FR-A- 2 554 516

## Beschreibung

Die Erfindung betrifft eine Aktoreinheit mit wenigstens zwei Aktorelementen, insbesondere als Stellantrieb für ein Kraftstoff-Einspritzventil einer Brennkraftmaschine, gemäß dem Oberbegriff des Patentanspruchs 1.

Bei der Kraftstoffversorgung von Brennkraftmaschinen werden zunehmend Speichereinspritzsysteme eingesetzt, bei denen sehr hohe Einspritzdrücke und hohe Schaltgeschwindigkeiten der Zumesseinrichtungen, der sogenannten Injektoren, eingesetzt werden. Bei derartigen Speichereinspritzsystemen wird Kraftstoff mit Hilfe von Kraftstoffinjektoren in die Brennräume der Brennkraftmaschine eingespritzt.

Der Kraftstoffinjektor weist im allgemeinen eine Einspritzdüse auf, die hydraulisch von einem Servoventil geöffnet und geschlossen wird, um den zeitlichen Verlauf des Einspritzvorgangs in die Brennkammer exakt festzulegen. Das Servoventil wird dabei von einem elektrisch angesteuerten Aktor betätigt, wobei sich vor allem der Einsatz von piezoelektrisch betriebenen Aktoren zum Erzielen ausreichend kurzer Schaltzeiten als vorteilhaft erwiesen hat. In einem solchem piezoelektrisch betriebenen Aktor wird durch Anlegen einer elektrischen Spannung eine Längenänderung eines Piezostapels ausgelöst, die - ggf. über eine Hebelvorrichtung - auf das Servoventil übertragen wird. Dieses öffnet und schließt wiederum die Einspritzdüse.

Die äußerst schnell schaltenden piezoelektrischen Aktoren mit Schaltzeiten im Bereich von weniger als 200 µs und den damit verbundenen hohen Beschleunigungen sind jedoch geeignet, hochfrequente, mechanische Schwingungen anzuregen und in das den Piezoaktor umgebende Gehäuse einzuleiten. Diese Vibrationen sind spektral sehr breitbandig und erzeugen ein hohes Maß an Körperschall bis in einen hochfrequentigen Bereich. Die Körperschallschwingungen pflanzen sich entlang des Injektorkörpers fort und werden in den Zylinderkopf der Brennkraftmaschine eingeleitet. Diese mechanischen Schwingungen auf der Oberfläche des Injektorkörpers und des Zylinderkopfes führen jedoch zu erheblichen Störgeräuschen, die den Fahrkomfort negativ beeinflussen können. Da Verbrennungsmotoren immer leiser werden, ist ein Einspritzventil, dessen Geräuschentwicklung das Gesamtgeräusch eines Motors hörbar überlagert, aus Komfortgründen nicht akzeptabel.

Um die Geräuschemissionen von elektrisch betätigten Aktoren zu vermindern, können diese mit zusätzlichen Abdeckhauben versehen werden. Eine derartige geräuschgedämpfte Aktoreinheit mit einem Piezoelement ist beispielsweise aus der deutschen Offenlegungsschrift 199 46 965 A1 bekannt. Allerdings sind derartige passive Schalldämpfungsmaßnahmen bei den beschriebenen Körperschallanregungen nur von sehr begrenzter Wirksamkeit.

Des Weiteren ist beispielsweise aus der DE 199 36 732 C2 eine Aktoreinheit mit wenigstens zwei Aktorelementen bekannt, die bei einer elektrischen Ansteuerung jeweils eine Längenänderung erfahren, und die über eine Wirkverbindung mit einer Stelleinrichtung verbunden sind, wobei die Richtungen der axialen Bewegungen des ersten und des zweiten Aktorelements sowie die Bewegungsrichtung der Stelleinrichtung jeweils achsparallel zueinander orientiert sind.

Ein Ziel der Erfindung besteht darin, eine Aktoreinheit, insbesondere einen Stellantrieb für ein Kraftstoffeinspritzventil einer Brennkraftmaschine zur Verfügung zu stellen, der die Nachteile im Stand der Technik vermeidet, und eine minimale Geräuschemission aufweist.

Dieses Ziel der Erfindung wird mit einer Aktoreinheit gemäß dem unabhängigen Patentanspruch 1 erreicht. Merkmale vorteilhafter Weiterbildungen der Erfindung ergeben sich aus den abhängigen Ansprüchen.

Um dieses Ziel der Erfindung zu erreichen, umfasst eine Aktoreinheit wenigstens zwei Aktorelemente, die bei einer elektrischen Ansteuerung jeweils eine Längenänderung erfahren, und die über eine Wirkverbindung mit einer Stelleinrichtung verbunden sind, wobei die Richtungen der axialen Bewegungen des ersten und zweiten Aktorelements sowie die Bewegungsrichtung der Stelleinrichtung jeweils achsparallel zueinander orientiert sind, womit der Vorteil eines annähernden idealen Massenausgleichs verbunden ist, der zur deutlichen Verringerung der Schallabstrahlung der Aktoreinheit nach außen führt.
Die Aktoreinheit umfasst zudem ein die Aktorelemente umgebendes Aktorgehäuse, das jeweils form- und/oder kraftschlüssig mit den Aktorelementen verbunden ist.

Erfindungsgemäß ist vorgesehen, dass eine vektorielle Summe der Massenimpulse der wenigstens zwei Aktorelemente zu jedem Zeitpunkt näherungsweise gleich Null ist. D.h. die Produkte aus den Massen und den Geschwindigkeiten der beiden Aktorelemente summieren sich vektoriell insgesamt zu Null.

Diese erfindungsgemäße Aktoreinheit weist den Vorteil einer signifikant reduzierten Schallabstrahlung aus. Das normalerweise nur in einfacher Ausführung vorhandene Aktorelement ist um ein zweites Aktorelement ergänzt, das in seiner Bewegungsrichtung umgekehrt zum ersten Aktorelement montiert ist und bei einer elektrischen Ansteuerung in entgegengesetzter Richtung ausgelenkt wird. Dadurch ist die nach außen resultierende Vibrationsenergie der Aktoreinheit im Idealfall annähernd Null. Zwar wird dieser Idealfall in der Realität nicht erreicht, jedoch genügen die damit erzielten Verbesserungen, um eine deutliche Reduktion der Körperschallanregung zu erreichen, insbesondere in den besonders störenden Frequenzbereichen zwischen 4 und 8 kHz.

Eine erste Ausführungsform der erfindungsgemäßen Aktoreinheit sieht vor, dass eine vektorielle Summe der Längsbewegungen der wenigstens zwei Aktorelemente zu jedem Zeitpunkt näherungsweise gleich Null ist. Diese Ausführungsform weist insbesondere den Vorteil auf, dass sich die beiden Aktorelemente bei gleicher elektrischer Ansteuerung in ihren Schallabstrahlungen gegenseitig dämpfen.

Als Aktorelemente kommen beispielsweise jeweils piezoelektrische Einheiten oder magnetostriktive Aktorelemente in Frage.

Die erfindungsgemäße Aktoreinheit eignet sich insbesondere als Stellantrieb eines Kraftstoffeinspritzventils.

Zusammenfassend ergeben sich die folgenden Aspekte der Erfindung. Durch die zusätzliche Montage eines zweiten Piezoelements in einer vorhandenen Aktoreinheit, welche sich genau entgegengesetzt zum eigentlichen Antriebspiezo bewegt, lassen sich Schwingungen, die an den Motorblock weitergeleitet und abgestrahlt werden, deutlich reduzieren, so dass sich insgesamt ein angenehmeres Klangbild des Einspritzventils allein, wie auch im Verbund mit dem Motorblock ergibt.

Das Prinzip, das bei der erfindungsgemäßen Aktoreinheit angewendet wird, beruht auf dem Prinzip der Schallauslöschung durch Gegenschall. Auf den schallverursachenden Piezo wird ein weiterer identischer Piezo, parallel zum ersten geschaltet, aber in seiner Bewegungsrichtung umgekehrt, montiert. So arbeiten beide Aktorelemente (z. B. Piezoelemente) in entgegengesetzter Richtung, und die nach außen resultierende Vibrationsenergie ist im Idealfall Null. Vorteilhaft ist dabei die unveränderte Einsetzbarkeit der Ansteuerelektronik. Zudem muss bei Änderungen der Ansteuerelektronik die Konstruktion des Einspritzventils nicht modifiziert werden. Das Verfahren lässt sich auch als eine Zusatzmaßnahme zu anderen Verfahren verwenden, um so eine weitere Schallreduktion zu erreichen.

Ebenso stellt die konstruktive Umsetzung keine große Anforderung hinsichtlich Toleranz oder Aufwand.

Ein weiterer Vorteil der erfindungsgemäßen Aktoreinheit mit ihren wenigstens zwei Aktorelementen liegt darin, dass wahlweise nur ein Aktor angesteuert werden kann, während der andere Aktor in Ruhe bleibt. Auf diese Weise kann mit hoher Steuerungsgenauigkeit ein definierter Teilhub eines Einspritzventils oder dgl. angesteuert werden. Aus Kostengründen werden piezobetriebene Einspritzventile normalerweise ohne eine Regelung betrieben. D.h. die Steuerung für die Piezoaktoren ist nicht in der Lage, zu erkennen, ob die Auslenkung exakt der Signalstärke des Steuersignals entspricht. Aus diesem Grund sind unterschiedliche Aktorhübe relativ schwierig einzuhalten. Lediglich der Maximalhub kann mit hinreichender Genauigkeit definiert werden. Bei einer Aktoreinheit mit zwei Aktorelementen kann hingegen auch ein Maximalhub nur eines Aktorelements mit großer Genauigkeit angesteuert werden und führt zu einem Hub, der exakt dem halben Wert des maximal möglichen Hubs beider Aktorelemente entspricht.

Die Erfindung wird nun anhand von bekannten und erfindungsgemäßen Ausführungsformen mit Bezug auf die beiliegenden Figuren näher erläutert. Es zeigen:
- Figur 1: eine zur Erfindung alternative Ausführungsform einer Aktoreinheit in schematischer Schnittansicht,
- Figur 2: eine Ausführungsform der erfindungsgemäßen Aktoreinheit in schematischer Schnittansicht,
- Figur 3: eine weitere alternative Ausführungsform einer Aktoreinheit in schematischer Schnittansicht,
- Figur 4: eine Aktoreinheit gemäß bekanntem Stand der Technik,
- Figur 5: ein Schalldruckdiagramm mit zwei beispielhaften Messkurven und
- Figur 6: ein weiteres Diagramm mit drei beispielhaften Lautheitskurven.

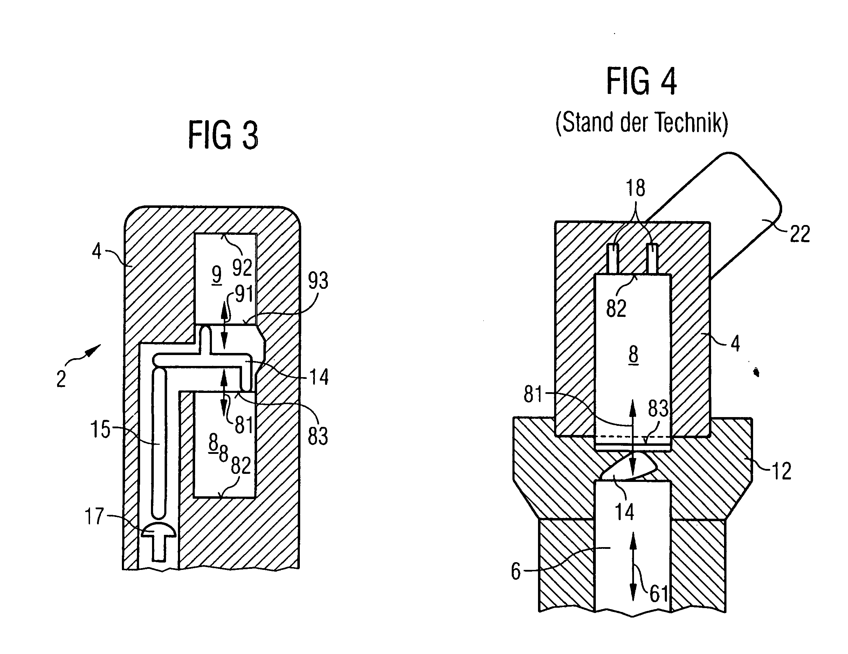

Figur 4 zeigt eine Aktoreinheit, wie sie aus dem Stand der Technik bekannt ist. Hierbei wird eine Stelleinrichtung 6, beispielsweise ein Stellglied eines Servoventils, über einen Hebelübersetzer 14 mittels eines Aktorelements 8 ausgelenkt. Dieses Aktorelement 8 kann beispielsweise ein Piezostack oder dergleichen sein, der mit einer ersten Stirnseite 82 sich gegen eine entsprechende Stirnseite eines Aktorgehäuses 4 abstützt. Eine der ersten Stirnseite gegenüberliegende weitere Stirnseite 83 erfährt je nach angelegter elektrischer Spannung eine Positionsänderung in axialer Richtung des Aktorelements 8, was durch den Doppelpfeil 81 entlang der Längsachse des Aktorelements 8 angedeutet ist.

Zum Ansteuern des Aktorelements 8 sind elektrische Anschlüsse 18 vorgesehen, die mit den Einzelelementen des Aktorelements 8 in elektrischer Verbindung stehen und die aus der ersten Stirnseite 82 herausragen. Diese elektrischen Anschlüsse 18 werden mit einer Spannung belegt, die eine Längsdehnung des Aktorelements 8 bewirkt. Die elektrische Verbindung zu einer Ansteuerelektronik wird über den Stecker 22 hergestellt.

Die in Figur 4 schematisch dargestellte Aktoreinheit entsprechend dem Stand der Technik verursacht erhebliche Schallemissionen aufgrund der Längsbewegungen des Aktorelements 8, die über das Aktorgehäuse 4 sowie das mit diesem fest verbundene Injektorgehäuse 12 als Körperschall in die Brennkraftmaschine eingeleitet werden.

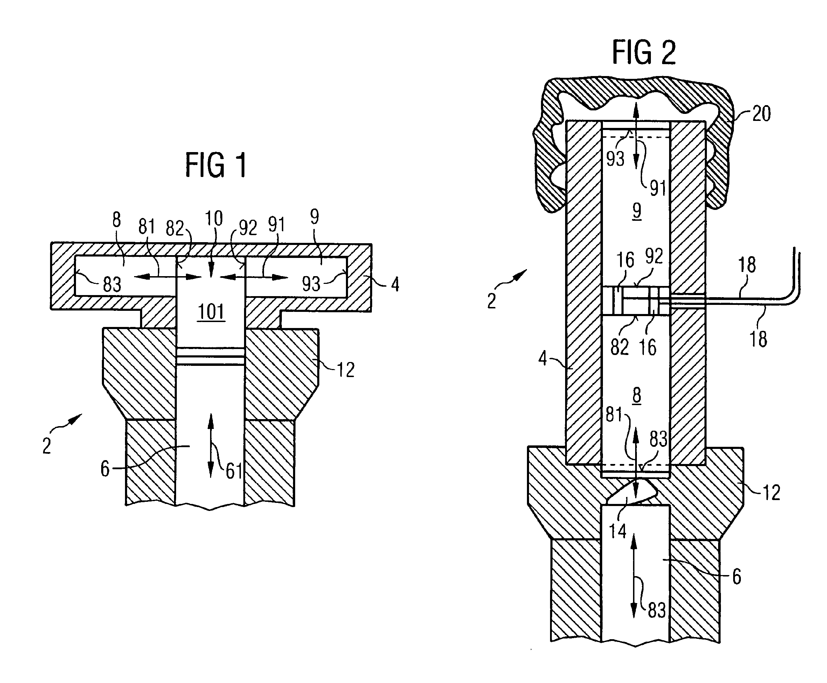

Figur 1 zeigt in einer schematischen Schnittdarstellung eine zur Erfindung alternative Ausführungsform einer Aktoreinheit 2, die durch zwei gegensinnig arbeitende Aktorelemente 8, 9 charakterisiert ist. Ein erstes Aktorelement 8 wirkt mit einer ersten Stirnseite 82 auf ein Übertragungsmedium 101 eines hydraulischen Übersetzers 10. Ein zweites Aktorelement 9 wirkt mit einer zweiten Stirnseite 92 ebenfalls auf das Übertragungsmedium 101. Erstes und zweites Aktorelement 8, 9 sind so gegenüberliegend angeordnet, dass eine erste Längsachse 81 des ersten Aktorelements 8 deckungsgleich zu einer zweiten Längsachse 91 des zweiten Aktorelements 9 angeordnet ist. Eine dritte Stirnseite 83 des ersten Aktorelements 8 stützt sich im Aktorgehäuse 4 ab. Eine vierte Stirnseite 93 des zweiten Aktorelements 9 stützt sich ebenfalls im Aktorgehäuse 4 ab. Bei einer elektrischen Ansteuerung erfahren das erste bzw. zweite Aktorelement 8 bzw. 9 jeweils eine gegensinnige Auslenkung, so dass eine vektorielle Summe der Längsbewegungen der zwei Aktorelemente 8, 9 zu jedem Zeitpunkt näherungsweise gleich Null ist.

Die gegensinnigen Auslenkungen entlang der ersten bzw. zweiten Längsachse 81, 91 bewirken über das Übertragungsmedium eine Längsbewegungsrichtung 61 der Stelleinrichtung 6, die zur Bewegungsrichtung der Aktorelemente 8, 9 senkrecht liegt. Die Stelleinrichtung 6 kann beispielsweise ein Stellkolben eines Servoventils eines Kraftstoffinjektors sein, der eine Öffnung und Schließung einer Düsennadel des Kraftstoffinjektors bewirkt.

Das Übertragungsmedium 101 des hydraulischen Übersetzers 10 kann beispielsweise ein geeignetes Hydrauliköl, beispielsweise auf Silikonbasis, oder dergleichen sein. Die Aktorelemente 8, 9 sind durch geeignete bekannte Maßnahmen gegen das Übertragungsmedium 101 abzudichten.

Figur 2 zeigt in einer weiteren schematischen Schnittdarstellung die Ausführungsform einer erfindungsgemäßen Aktoreinheit 2. Hierbei sind erste Längsachse 81 des ersten Aktorelements 8, zweite Längsachse 91 des zweiten Aktorelements 9 und Bewegungsrichtung 61 der Stelleinrichtung 6 jeweils achsparallel zueinander orientiert. Die Auslenkung der Stelleinrichtung 6 wird über den Hebelübersetzer 14 im wesentlichen durch die Auslenkung des ersten Aktorelements 8 entlang seiner ersten Längsachse 81 bewirkt, indem seine dritte Stirnseite 83 auf den Hebelübersetzer 14 einwirkt. Die erste Stirnseite 82 des ersten Aktorelements 8 ist unbeweglich im Aktorgehäuse 4 abgestützt. Die zweite Stirnseite 92 des zweiten Aktorelements 9 steht über zwei Abstützungen 16 mit der ersten Stirnseite 82 des ersten Aktorelements 8 in fester Verbindung. In die Abstützungen 16 sind gleichzeitig die elektrischen Anschlüsse der beiden Aktorelemente 8, 9 integriert, die über elektrische Anschlüsse 18 mit einer Spannung beaufschlagt werden.

Bei einer Spannungsbeaufschlagung bewegen sich die dritten und vierten Stirnseiten 83, 93 der Aktorelemente 8, 9 jeweils um einen gleichen Betrag in entgegengesetzte Richtung. Auf diese Weise wird ein entstehender Massenimpuls durch die Auslenkung nur eines Aktorelements (z. B. 8) durch das jeweils zweite Aktorelement (z. B. 9) weitgehend bedämpft. Eine Körperschallanregung kann auf diese Weise ebenfalls stark reduziert werden. An einer der vierten Stirnseite 93 des zweiten Aktorelements 9 zugewandten Oberseite des Aktorgehäuses 4 ist weiterhin eine Verkleidung 20 vorgesehen, die das zweite Aktorelement 9 nach außen hin abschließt und die zudem eine passive Bedämpfung des Aktorgehäuses 4 bewirkt.

Figur 3 zeigt in einer schematischen Schnittdarstellung eine weitere alternative Ausführungsform einer Aktoreinheit 2. Hierbei sind erste Längsachse 81 des ersten Aktorelements 8, zweite Längsachse 91 des zweiten Aktorelements 9 und eine Bewegungsrichtung einer Hubübertragungsstange 15 sowie eines Ventilpilzes 17 eines hydraulischen Servoventils jeweils achsparallel zueinander orientiert. Die Auslenkung der Hubübertragungsstange 15 wird über den Hebelübersetzer 14 zu gleichen Teilen durch die Auslenkungen der Aktorelemente 8, 9 entlang ihrer Längsachsen 81, 91 bewirkt. Die erste Stirnseite 82 des ersten Aktorelements 8 sowie die zweite Stirnseite 92 des zweiten Aktorelements 9 sind jeweils unbeweglich im Aktorgehäuse 4 abgestützt.

Bei einer Spannungsbeaufschlagung bewegen sich die dritten und vierten Stirnseiten 83, 93 der Aktorelemente 8, 9 jeweils um einen gleichen Betrag in entgegengesetzte Richtung. Auf diese Weise wird ein entstehender Massenimpuls durch die Auslenkung nur eines Aktorelements (z. B. 8) durch das jeweils zweite Aktorelement (z. B. 9) weitgehend bedämpft. Eine Körperschallanregung kann auf diese Weise ebenfalls stark reduziert werden.

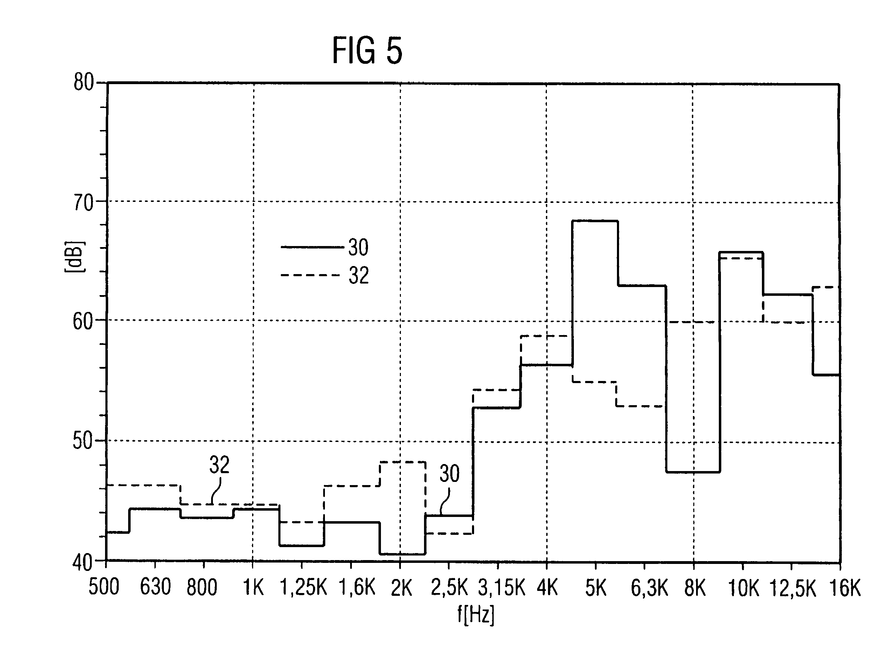

Figur 5 zeigt in beispielhaften Messkurven 30, 32 einen Vergleich eines herkömmlichen Injektors (entsprechend Figur 4) mit einem optimierten Injektor entsprechend der Ausführungsform nach der Erfindung (entsprechend Figur 2). Derzeit werden Einspritzventile bzw. deren Piezoaktoren mit einer typischen Energie von ca. 35 mJ bis ca. 70 mJ betrieben. Um dieselbe Bewegungsenergie in die entgegengesetzte Richtung zur Schallauslöschung aufzubringen, benötigt ein zweites Piezoelement noch einmal dieselbe Energiemenge.

In der in Figur 5 dargestellten Messung wurden exemplarisch ein Injektor mit 48,5 mJ und der optimierte Injektor entsprechend mit 97 mJ betrieben. Trotz deutlich erhöhten Energieeintrag lässt sich eine signifikante Schallemissionsreduktion im relevanten Frequenzbereich von ca. 4 kHz bis 8 kHz nachweisen.

Die erste Schalldruckkurve 30 charakterisiert den Schalldruck eines herkömmlichen Injektors (vgl. Figur 3) in Dezibel über eine Frequenz zwischen 500 Hz und 16 kHz. Die zweite Schalldruckkurve 32 verdeutlicht den Schalldruckverlauf der entsprechend Figur 2 optimierten Aktoreinheit. Der Doppelpiezo erhöht zwar den Pegel bei der 8 kHz-Terz, senkt ihn jedoch bei der 5 kHz- und 6,3 kHz-Terz deutlich ab, was insgesamt zu einer Gesamtpegelreduktion von bis zu 4 dB (A) führt.

Unter Berücksichtung psychoakustischer Effekte ist die Lautheit als genormte Messgröße am aussagefähigsten bzgl. Klangcharakter und Lästigkeitsempfindung.

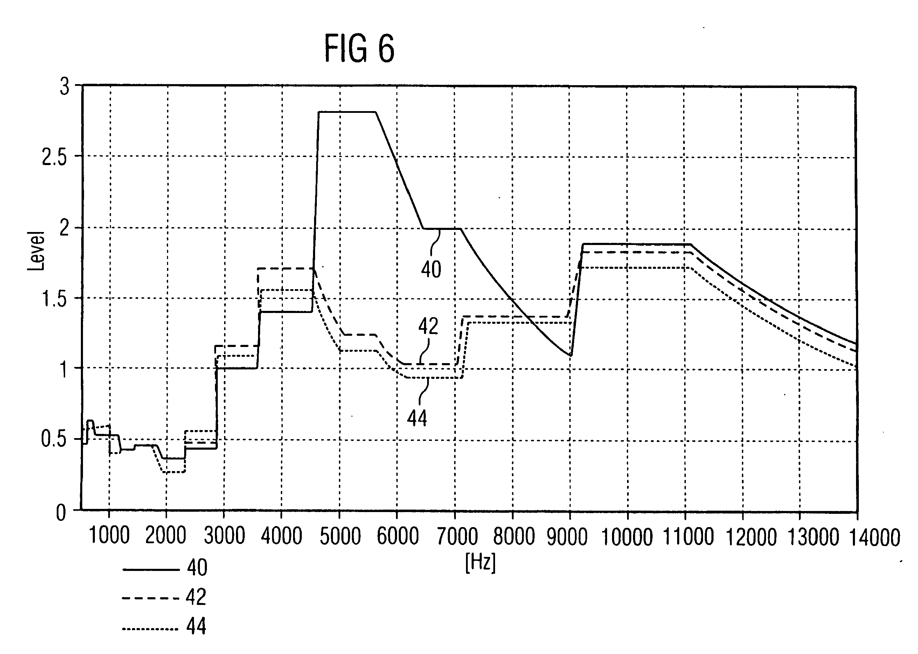

Figur 6 zeigt daher in drei verschiedenen Lautheitskurven 40, 42, 44 die Einflüsse verschiedener Ausführungsformen eines Piezoaktors auf die empfundene Lautheit.

Die erste Lautheitskurve 40 kennzeichnet ein Einspritzventil herkömmlicher Bauart. Die Betonung im Bereich 4 kHz bis 6 kHz ist dabei offensichtlich. Im Vergleich hierzu wurden Messungen an einem Einspritzventil mit doppeltem Piezo durchgeführt, wobei die zweite Lautheitskurve einen Injektor ohne Kunststoffumspritzung (Verkleidung 20 in Fig. 2) und die dritte Lautheitskurve 44 denselben Injektor mit leichter Folienverkleidung darstellt. Diese Verkleidung wurde gewählt, da die Kunststoffumspritzung ebenfalls eine geringe Dämpfung der direkt abgestrahlten Schallwellen der bewegten Fläche des Piezos bewirkt.

An der Lautheitsuntersuchung wird deutlich, dass das Minimum bei der 8 kHz-Terz beim herkömmlichen Injektor nahezu keine Rolle spielt und innerhalb dieser Terz weder Optimierung noch Verschlechterung eine gravierende Veränderung bewirken würde, da die 6,3 kHz-Terz diese Optimierung nahezu vollständig verdeckt. Somit stellt der deutlich höher Pegel bei dieser Terz bei dem Injektor mit dem Doppelpiezo keine negative Beeinflussung des Klangbildes dar.

## Patentansprüche

1. Aktoreinheit (2) mit wenigstens zwei Aktorelementen (8, 9) die bei einer elektrischen Ansteuerung jeweils eine Längenänderung erfahren, und die über eine Wirkverbindung mit einer Stelleinrichtung (6) verbunden sind, und mit einem die Aktorelemente (8, 9) umgebenden Aktorgehäuse (4) das jeweils form- und/oder kraftschlüssig mit den Aktorelementen (8, 9) verbunden ist,
**dadurch gekennzeichnet, dass**
eine vektorielle Summe der Massenimpulse der wenigstens zwei Aktorelemente (8, 9) zu jedem Zeitpunkt näherungsweise gleich Null ist, wobei die Richtungen der axialen Bewegungen des ersten und zweiten Aktorelements (8, 9) sowie die Bewegungsrichtung (61) der Stelleinrichtung (6) jeweils achsparallel zueinander orientiert sind, und die wenigstens zwei Aktorelemente (8, 9) und die Stelleinrichtung (6) in Reihe angeordnet sind.

2. Aktoreinheit nach Anspruch 1,
**dadurch gekennzeichnet, dass**
eine vektorielle Summe der Längsbewegungen der wenigstens zwei Aktorelemente (8, 9) zu jedem Zeitpunkt näherungsweise gleich Null ist.

3. Aktoreinheit nach Anspruch 1 oder 2,
**dadurch gekennzeichnet, dass**
jeweils eine erste bzw. eine zweite Stirnseite (82 bzw. 92) des ersten bzw. zweiten Aktorelements (8 bzw. 9) über eine Abstützung (16) derart abgestützt ist, dass die erste Stirnseite (82) über die Abstützung (16) mit der zweiten Stirnseite (92) in fester Verbindung steht.

4. Aktoreinheit nach Anspruch 3,
**dadurch gekennzeichnet, dass**
die Abstützung (16) zwei Abstützungen umfasst, in die die elektrischen Anschlüsse der Aktorelemente (8, 9) integriert sind.

5. Aktoreinheit nach einem der vorhergehenden Ansprüche,
**gekennzeichnet durch**
eine Übersetzungseinrichtung zur Übersetzung einer Auslenkung eines Aktorelements (8).

6. Aktoreinheit nach Anspruch 5,
**dadurch gekennzeichnet, dass**
die Übersetzungseinrichtung ein hydraulischer Übersetzer oder ein Hebelübersetzer (14) ist.

7. Aktoreinheit nach einem der vorhergehenden Ansprüche,
**gekennzeichnet durch**
eine Verkleidung (20), welche an einer der vierten Stirnseite (93) des zweiten Aktorelements (9) zugewandten Oberseite des Aktorgehäuses (4) angeordnet ist und welche das zweite Aktorelement (9) nach außen hin abschließt.

8. Aktoreinheit nach einem der vorhergehenden Ansprüche,
**dadurch gekennzeichnet, dass**
die Aktorelemente (8, 9) jeweils piezoelektrische Aktorelemente sind.

9. Aktoreinheit nach einem der Ansprüche 1 bis 7,
**dadurch gekennzeichnet, dass**
die Aktorelemente (8, 9) jeweils magnetostriktive Aktorelemente sind.

10. Aktoreinheit nach einem der vorhergehenden Ansprüche,
**dadurch gekennzeichnet, dass**
die Aktoreinheit (2) ein Stellantrieb eines KraftstoffEinspritzventils ist.

11. Aktoreinheit nach einem der vorhergehenden Ansprüche,
**dadurch gekennzeichnet, dass**
die Aktorelemente (8, 9) der Aktoreinheit (2) getrennt voneinander und einzeln ansteuerbar sind.

## Claims

1. Actuator unit (2) having at least two actuator elements (8, 9), each of which when electrically activated experiences a change in length, and which are connected to a final control device (6) by means of an active connection, and having an actuator housing (4) which encloses the actuator elements (8, 9) and which is connected to the actuator elements (8, 9) by means of a positive and/or friction fit,
**characterised in that**
a vectorial sum of the mass impulses of the at least two actuator elements (8, 9) is approximately equal to zero at any given time, the directions of the axial movements of the first and second actuator element (8, 9) as well as the direction of movement (61) of the final control device (6) are orientated in each case axially parallel to one another, and the at least two actuator elements (8, 9) and the final control device (6) are arranged in series.

2. Actuator unit according to claim 1,
**characterised in that**
a vectorial sum of the longitudinal movements of the at least two actuator elements (8, 9) is approximately equal to zero at any given time.

3. Actuator unit according to claim 1 or 2,
**characterised in that**
a first and a second end face (82 and 92 respectively) of the first and second actuator element (8 and 9 respectively) are supported in each case via a support (16) in such a way that the first end face (82) is permanently connected to the second end face (92) via said support (16).

4. Actuator unit according to claim 3,
**characterised in that**
the support (16) comprises two supports into which the electrical terminals of the actuator elements (8, 9) are integrated.

5. Actuator unit according to one of the preceding claims,
**characterised by**
a transmission device for transmitting a deflection of an actuator element (8).

6. Actuator unit according to claim 5,
**characterised in that**
the transmission device is a hydraulic transmission device or a leverage transmission device (14).

7. Actuator unit according to one of the preceding claims,
**characterised by**
a cover (20) which is disposed on a top surface of the actuator housing (4), said top surface facing the fourth end face (93) of the second actuator element (9), and which closes off said second actuator element (9) externally.

8. Actuator unit according to one of the preceding claims,
**characterised in that**
each of the actuator elements (8, 9) is a piezoelectric actuator element.

9. Actuator unit according to one of claims 1 to 7,
**characterised in that**
each of the actuator elements (8, 9) is a magnetostrictive actuator element.

10. Actuator unit according to one of the preceding claims,
**characterised in that**
the actuator unit (2) is an actuator of a fuel injection valve.

11. Actuator unit according to one of the preceding claims,
**characterised in that**
the actuator elements (8, 9) of the actuator unit (2) can be controlled separately from each other and individually.

## Revendications

1. Unité d'actionneur (2) comprenant au moins deux éléments d'actionneur (8, 9), qui subissent chacun une modification de longueur lors d'un actionnement électrique, et qui sont reliés au moyen d'une liaison active à un dispositif de positionnement (6), et comprenant un boîtier d'actionneur (4) entourant les éléments d'actionneur (8, 9), qui est relié respectivement par complémentarité de formes et/ou adhérence de force aux éléments d'actionneur (8, 9),
**caractérisée en ce que**
une somme vectorielle des impulsions de masse des au moins deux éléments d'actionneur (8, 9) est approximativement égale à zéro à tout moment, les directions des déplacements axiaux du premier et du second éléments d'actionneur (8, 9) ainsi que le sens de déplacement (61) du dispositif de positionnement (6) étant orientés à chaque fois parallèlement entre eux, et les au moins deux actionneurs (8, 9) et le dispositif de positionnement (6) étant disposés en rangée.

2. Unité d'actionneur selon la revendication 1,
**caractérisée en ce que**
une somme vectorielle des déplacements longitudinaux des au moins deux éléments d'actionneur (8, 9) est pratiquement égale à zéro à tout moment.

3. Unité d'actionneur selon la revendication 1 ou 2,
**caractérisée en ce que**
respectivement un premier ou un second côté avant (82 ou 92) du premier ou du second élément d'actionneur (8 ou 9) est soutenu au moyen d'un support (16) de telle sorte que le premier côté avant (82) est en liaison fixe par l'intermédiaire du support (16) avec le second côté avant (92).

4. Unité d'actionneur selon la revendication 3,
**caractérisée en ce que**
le support (16) comprend deux supports dans lesquels sont intégrés les branchements électriques des éléments d'actionneur (8, 9) .

5. Unité d'actionneur selon l'une quelconque des revendications précédentes,
**caractérisée par**
un dispositif de transmission pour la transmission d'une déviation d'un élément d'actionneur (8).

6. Unité d'actionneur selon la revendication 5,
**caractérisée en ce que**
le dispositif de transmission est un transmetteur hydraulique ou un transmetteur à levier (14).

7. Unité d'actionneur selon l'une quelconque des revendications précédentes,
**caractérisée par**
un habillage (20), qui est disposé sur un côté supérieur, tourné vers le quatrième côté avant (93) du second élément d'actionneur (9), du boîtier d'actionneur (4) et qui ferme le second élément d'actionneur (9) vers l'extérieur.

8. Unité d'actionneur selon l'une quelconque des revendications précédentes,
**caractérisée en ce que**
les éléments d'actionneur (8, 9) sont respectivement des éléments d'actionneur piézo-électriques.

9. Unité d'actionneur selon l'une quelconque des revendications 1 à 7,
**caractérisée en ce que**
les éléments d'actionneur (8, 9) sont respectivement des éléments d'actionneur magnétostrictifs.

10. Unité d'actionneur selon l'une quelconque des revendications précédentes,
**caractérisée en ce que**
l'unité d'actionneur (2) est un servomoteur d'une soupape d'injection de carburant.

11. Unité d'actionneur selon l'une quelconque des revendications précédentes,
**caractérisée en ce que**
les éléments d'actionneur (8, 9) de l'unité d'actionneur (2) sont séparés les uns des autres et peuvent être actionnés individuellement.
